# EUROPÄISCHE PATENTANMELDUNG

(11) **EP 2 335 965 A1**
(43) Veröffentlichungstag der Anmeldung: **22.06.2011**
(21) Anmeldenummer: 10194241.5
(22) Anmeldetag: 08.12.2010
(51) Int. Cl.: B60L 11/18

(54) **Kraftfahrzeug**

(30) Priorität: 15.12.2009 DE 102009058187
(71) Anmelder: Continental Automotive GmbH, 30165 Hannover (DE)
(72) Erfinder: Sinz, Wolfgang, 65843, Sulzbach (Taunus) (DE)

(57) **Zusammenfassung**

Gegenstand der Erfindung ist Kraftfahrzeug 1, welches von mindestens einem Elektromotor 2 angetrieben wird, wobei der Elektromotor 2 von einem wiederaufladbaren Energiespeicher 3 mit elektrischer Energie versorgt wird und der wiederaufladbare Energiespeicher 3 mit einer Methanolbrennstoffzelle 4 verbunden ist.

## Beschreibung

### Kraftfahrzeug

Gegenstand der Erfindung ist ein Kraftfahrzeug, welches von mindestens einem Elektromotor angetrieben wird, wobei der Elektromotor von einem wiederaufladbaren Energiespeicher mit elektrischer Energie versorgt wird.

Derartige Kraftfahrzeuge sind bekannt und somit Stand der Technik. Die Kraftfahrzeuge können sowohl von einem Elektromotor als auch von einem Elektromotor und einem Verbrennungsmotor angetrieben werden. Nachteilig bei solchen Kraftfahrzeugen ist die ausreichende Versorgung mit elektrischer Energie. Aufgrund der vorhandenen Speichertechnik ist es derzeit nicht möglich, ein eingangs genanntes Kraftfahrzeug mit gleichen Werten hinsichtlich Höchstgeschwindigkeit, Beschleunigung und Reichweite bereitzustellen wie Kraftfahrzeuge, die nur einen mit Verbrennungsmotor besitzen. Als Energiespeicher lassen sich Lithium-Ionen-Batterien einzusetzen. Ein derartiger Energiespeicher, der die eingangs genannten Vorgaben erfüllt, benötigt aufgrund seiner Abmessungen verhältnismäßig viel Bauraum und besitzt überdies ein hohes Gewicht. Beide Faktoren schränken den Nutzwert eines solchen Kraftfahrzeugs erheblich ein, da es nur noch über einen eingeschränkten Nutzraum und ein eingeschränktes Zuladungsgewicht verfügt. Des Weiteren benötigen derartige Energiespeicher eine nicht unerhebliche Ladezeit, welche die Verfügbarkeit des Kraftfahrzeugs weiter einschränkt.

Es ist weiter bekannt, den Elektromotor über eine Brennstoffzelle auf Wasserstoffbasis mit elektrischer Energie zu versorgen. Probleme hierbei sind unter anderem die Anlaufzeit der Brennstoffzelle. Ebenso sind der Transport des Wasserstoffs, die Speicherung und das Nachfüllen des Wasserstofftanks problematisch. Ein weiterer Nachteil ist die fehlende Infrastruktur für eine flächendeckende Versorgung mit Wasserstoff. Für vergleichbare Fahrleistungen benötigen entsprechende Brennstoffzellen ebenfalls unverhältnismäßig viel Bauraum bei einem hohen Eigengewicht.

Der Erfindung liegt daher die Aufgabe zugrunde, ein Kraftfahrzeug der eingangs genannten Art zu schaffen, dessen wiederaufladbarer Energiespeicher so klein gestaltet werden kann, dass die Nutzung des Kraftfahrzeugs nicht wesentlich beeinträchtigt wird.

Erfindungsgemäß wird die Aufgabe mit einer Kraftstoffpumpe dadurch gelöst, dass der wiederaufladbare Energiespeicher mit einer Methanolbrennstoffzelle verbunden ist.

Die von der Methanolbrennstoffzelle erzeugte elektrische Energie wird zum Aufladen des wiederaufladbaren Speichers genutzt. Dadurch wird die Reichweite des Kraftfahrzeugs vergrößert, da bereits während des Betriebs des Kraftfahrzeugs das Aufladen des wiederaufladbaren Speichers erfolgen kann. Sowohl der wiederaufladbare Speicher als auch die Methanolbrennstoffzelle kann wesentlich kleiner ausgebildet werden, da beide Aggregate zusammen die gewünschten Fahrleistungen erbringen. Auf diese Weise kann der wiederaufladbare Speicher kleiner ausgeführt werden, da er aufgrund der Wiederaufladbarkeit während des Betriebs eine geringere Speicherdichte erfordert. Die Methanolbrennstoffzelle kann kleiner ausgebildet werden, da sie nicht auf die Maximalwerte der Fahrleistungen ausgelegt sein muss, sondern nur die im Mittel entnommene elektrische Leistung nachliefern muss. Darüber hinaus ist Methanol wesentlich einfacher zu handhaben als Wasserstoff, und durch die Ähnlichkeit zu herkömmlichen Vergaserkraftstoff gut beherrschbar. Es ist auch denkbar, die Methanolbrennstoffzelle als zusätzliche Energiequelle zum wiederaufladbaren Speicher zu nutzen, um kurzfristig dem Elektromotor mehr elektrische Leistung zur Verfügung zu stellen. Insbesondere beim Anfahren, schnellen Beschleunigen oder im Bereich der Höchstgeschwindigkeit ist dies vorteilhaft.

Die Reichweite eines derart angetrieben Kraftfahrzeugs lässt sich weiter erhöhen, wenn die Methanolbrennstoffzelle einen Tank für Methanol besitzt.

Eine größere Flexibiltät in der Anordnung der Methanolbrennstoffzelle im Kraftfahrzeug wird erreicht, wenn der Tank für Methanol mit der Methanolbrennstoffzelle über eine Leitung verbunden ist. Diese Ausbildung erlaubt die getrennte Anordnung von Methanolbrennstoffzelle und Tank. Analog zu einem Kraftstoffbehälter kann der Tank für Methanol in ähnlich schwer zugänglichen Bereichen mit ähnlich komplexer Formgestalt angeordnet werden. Es hat sich dabei als vorteilhaft erwiesen, den Tank mit einem Einfüllstutzen auszubilden, was das Nachfüllen von Methanol erleichtert. In dieser Ausgestaltung kann beispielsweise die Infrastruktur der vorhandenen Tankstellen für die Versorgung mit Methanol genutzt werden.

Eine zuverlässige Versorgung der Methanolbrennstoffzelle mit Methanol auch während des Betriebs des Kraftfahrzeugs ist gewährleistet, wenn der Tank für Methanol eine darin angeordneten Fördereinheit aufweist.

In einer anderen Ausgestaltung ist die Pumpe zum Fördern von Methanol aus dem Tank an der Methanolbrennstoffzelle angeordnet. Auf diese Weise lässt sich das nutzbare Volumen im Tank erhöhen.

An einem Ausführungsbeispiel wird die Erfindung näher erläutert. Es zeigt in
Figur 1: ein erfindungsgemäßes Kraftfahrzeug,
Figur 2: eine zweite Ausführungsform des Kraftfahrzeugs,

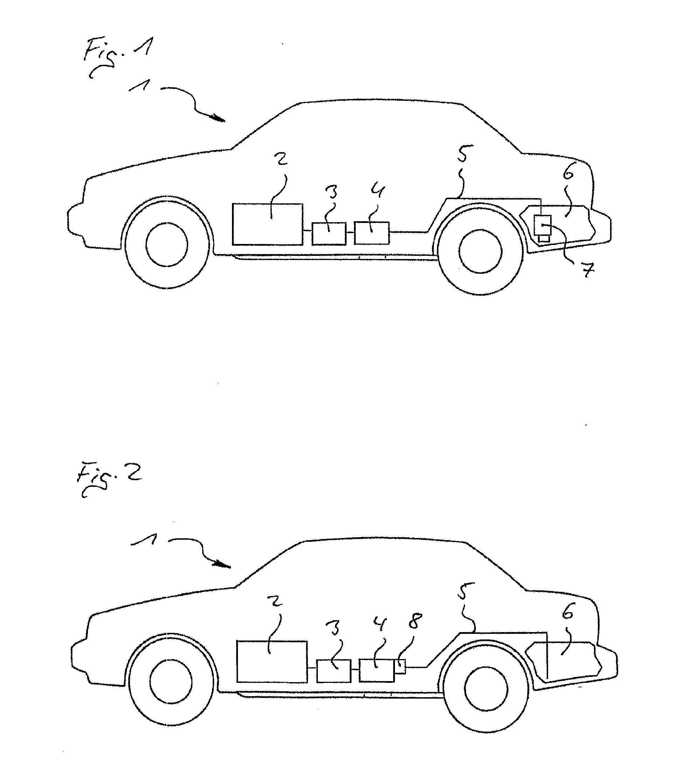

Figur 1 zeigt ein Kraftfahrzeug 1 mit einem Elektromotor 2 als Antrieb. Ein wiederaufladbarer Speicher 3 in Form einer Lithium-Ionen Batterie versorgt den Elektromotor 2 mit elektrischer Energie. Der wiederaufladbare Speicher 3 ist mit einer Methanolbrennstoffzelle 4 verbunden, welche sowohl während des Betriebs des Kraftfahrzeugs 1 als auch während des Abstellens des Kraftfahrzeugs betrieben werden kann und die von ihr erzeugte elektrische Energie dem wiederaufladbaren Speicher 3 zuführt. Zur Versorgung der Methanolbrennstoffzelle 4 ist diese über eine Leitung 5 mit einem Tank 6 für Methanol verbunden. Eine im Tank 6 angeordnete Fördereinheit 7, welche im wesentlichen eine Förderpumpe und gegebenenfalls einen Schwalltopf umfasst, fördert das Methanol in der erforderlichen Menge und dem erforderlichen Druck zur Methanolbrennstoffzelle 4. In der zweiten Ausführungsform nach Figur 2 ist die Förderpumpe 8 an der Methanolbrennstoffzelle 4 angeordnet. Methanolbrennstoffzelle 4 und Förderpumpe 8 können eine bauliche Einheit bilden. Durch die Förderpumpe 8 wird das Methanol aus dem Tank 6 über die Leitung 5 abgesaugt, wobei die Ansaugöffnung der Leitung 5 an der tiefsten Stelle des Tanks 6 angeordnet ist, um eine möglichst vollständige Entleerung des Tanks 6 zu ermöglichen.

## Patentansprüche

1. Kraftfahrzeug, welches von mindestens einem Elektromotor angetrieben wird, wobei der Elektromotor von einem wiederaufladbaren Energiespeicher mit elektrischer Energie versorgt wird, **dadurch gekennzeichnet, dass** der wiederaufladbare Energiespeicher (3) mit einer Methanolbrennstoffzelle (4) verbunden ist.

2. Kraftfahrzeug nach Anspruch 1, **dadurch gekennzeichnet, dass** die Methanolbrennstoffzelle (4) einen Tank (6) für Methanol besitzt.

3. Kraftfahrzeug nach Anspruch 2, **dadurch gekennzeichnet, dass** der Tank (6) für Methanol mit der Methanolbrennstoffzelle (4) über eine Leitung (5) verbunden ist.

4. Kraftfahrzeug nach Anspruch 3, **dadurch gekennzeichnet, dass** der Tank (6) für Methanol eine darin angeordneten Fördereinheit (7) aufweist.

5. Kraftfahrzeug nach Anspruch 3, **dadurch gekennzeichnet, dass** an der Methanolbrennstoffzelle (4) eine Förderpumpe (8) zum Fördern von Methanol aus dem Tank (6) angeordnet ist.
